(19) Europäisches Patentamt
European Patent Office
Office européen des brevets

(11) Veröffentlichungsnummer: **0 450 434 B1**

(12) # EUROPÄISCHE PATENTSCHRIFT

(45) Veröffentlichungstag der Patentschrift: **31.08.94**

(51) Int. Cl.$^5$: **C09B 67/22**, D06P 1/18

(21) Anmeldenummer: **91104594.6**

(22) Anmeldetag: **23.03.91**

(54) **Marineblaue Farbstoffmischungen.**

(30) Priorität: **02.04.90 DE 4010512**

(43) Veröffentlichungstag der Anmeldung:
**09.10.91 Patentblatt 91/41**

(45) Bekanntmachung des Hinweises auf die Patenterteilung:
**31.08.94 Patentblatt 94/35**

(84) Benannte Vertragsstaaten:
**CH DE FR GB IT LI**

(56) Entgegenhaltungen:
**EP-A- 0 214 445**
**EP-A- 0 311 910**
**EP-A- 0 362 637**

(73) Patentinhaber: **BASF Aktiengesellschaft**
**Carl-Bosch-Strasse 38**
**D-67063 Ludwigshafen (DE)**

(72) Erfinder: **Hahn, Erwin, Dr.**
**Am Buechsenackerhang 31**
**W-6900 Heidelberg (DE)**
Erfinder: **Hansen, Guenter, Dr.**
**Alwin-Mittasch-Platz 8**
**W-6700 Ludwigshafen (DE)**
Erfinder: **Lamm, Gunther, Dr.**
**Heinrich-Heine-Strasse 7**
**W-6733 Hassloch (DE)**
Erfinder: **Reichelt, Helmut, Dr.**
**Johann-Gottlieb-Fichte-Strasse 56**
**W-6730 Neustadt (DE)**
Erfinder: **Wagenblast, Gerhard, Dr.**
**Bachweg 8**
**W-6719 Weisenheim (DE)**

**EP 0 450 434 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Farbstoffmischungen, enthaltend mindestens einen Farbstoff der Formel I

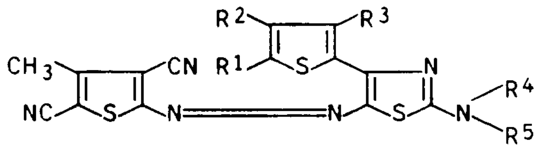

(I),

in der

$R^1$, $R^2$ und $R^3$ gleich oder verschieden sind und unabhängig voneinander jeweils Wasserstoff oder $C_1$-$C_4$-Alkyl,

$R^4$ $C_1$-$C_4$-Alkyl oder $C_3$-$C_8$-Alkyl, das durch 1 bis 3 Sauerstoffatome in Etherfunktion unterbrochen ist, und

$R^5$ $C_1$-$C_4$-Alkyl oder $C_3$-$C_{12}$-Alkyl, das durch 1 bis 4 Sauerstoffatome in Etherfunktion unterbrochen ist, bedeuten,

sowie mindestens einen Farbstoff der Formel II

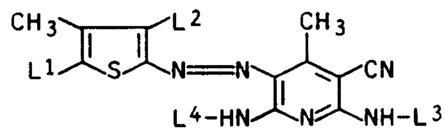

(II)

und/oder mindestens einen Farbstoff der Formel III

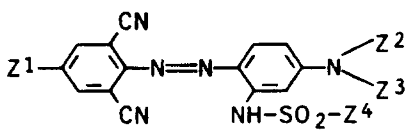

(III),

wobei

$L^1$ und $L^2$ jeweils Cyano oder einer der beiden Reste auch $C_1$-$C_2$-Alkoxycarbonyl,

einer der beiden Resten $L^3$ und $L^4$ Wasserstoff und der andere einen Rest der Formel

$(CH_2)_2O(CH_2)_2OH$, $(CH_2)_2O(CH_2)_2OCOCH_3$, $(CH_2)_3OCH(CH_3)CH_2OCH_3$, $(CH_2)_3O(CH_2)_4OH$, $(CH_2)_3O$-$(CH_2)_4OCHO$, $(CH_2)_3O(CH_2)_4OCOCH_3$ oder $(CH_2)_3O(CH_2)_2OCH_3$ und

$Z^1$, $Z^2$, $Z^3$ und $Z^4$ gleich oder verschieden sind und unabhängig voneinander jeweils $C_1$-$C_4$-Alkyl bedeuten,

wobei das Gewichtsverhältnis Farbstoff I:Farbstoff II und/oder III 80:20 bis 96:4 beträgt.

Die in den neuen Mischungen enthaltenen Thiophenazofarbstoffe der Formel I sind bekannt und z.B. in der älteren EP-A-362 637 Patentanmeldung beschrieben. Sie ergeben auf Polyester Ausfärbungen in blauen Farbtönen.

Aufgabe der vorliegenden Erfindung war es, Farbstoffmischungen bereitzustellen, die auf Polyester marineblaue Farbtöne ergeben und dabei ein gutes Aufbauvermögen und eine hohe Ausgiebigkeit aufweisen.

Demgemäß wurden die eingangs näher bezeichneten Farbstoffmischungen gefunden.

Alle in den obengenannten Formeln I, II und III auftretenden Alkylgruppen können sowohl geradkettig als auch verzweigt sein.

Reste $R^1$, $R^2$, $R^3$, $R^4$, $R^5$, $Z^1$, $Z^2$, $Z^3$ und $Z^4$ sind z.B. Methyl, Ethyl, Propyl, Isopropyl, Butyl, Isobutyl, sec-Butyl oder tert-Butyl.

Reste $R^4$ und $R^5$ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Doxaoctyl, 3,7-Dioxanonyl, 4,7-Dioxaoctyl, 4,7-Dioxa-5-methyloctyl, 4,7-Dioxanonyl, 4,8-Dioxadeyl, 3,6,9-Trioxadecyl, 3,6,9-Trioxaundecyl, 4,7,10-Trioxaundecyl oder 4,7,10-Trioxadodecyl.

Reste $R^5$ sind weiterhin z.B. 3,6,9,12-Tetraoxatridecyl oder 3,6,9,12-Tetraoxatetradecyl.

Reste $L^1$ oder $L^2$ sind z.B. Methoxycarbonyl oder Ethoxycarbonyl.

Bevorzugt sind Farbstoffmischungen, in denen das Gewichtsverhältnis Farbstoff I:Farbstoff II und/oder Farbstoff III 80:20 bis 96:4 beträgt.

Bevorzugt sind weiterhin Farbstoffmischungen, die einen Farbstoff der Formel I enthalten, in der $R^4$ und $R^5$ voneinander verschieden sind.

Besonders hervorzuheben sind Farbstoffmischungen, die einen Farbstoff der Formel I enthalten, worin

- $R^1$, $R^2$ und $R^3$ gleich oder verschieden sind und unabhängig voneinander jeweils Wasserstoff oder Methyl,
- $R^4$ $C_2$-$C_4$-Alkyl oder $C_3$-$C_8$-Alkyl, das durch 1 bis 3 Sauerstoffatome in Etherfunktion unterbrochen ist, und
- $R^5$ $C_3$-$C_4$-Alkyl oder $C_3$-$C_{12}$-Alkyl, das durch 1 bis 4 Sauerstoffatome in Etherfunktion unterbrochen ist, bedeuten.

Besonders hervorzuheben sind weiterhin Farbstoffmischungen, die einen dl8bstoff der Formel I enthalten, in der $R^4$ $C_2$-$C_4$-Alkyl und $R^5$ $C_3$-$C_{12}$-Alkyl, das durch 1 bis 4 Sauerstoffatome in Etherfunktion unterbrochen ist, bedeuten.

Besonders hervorzuheben sind weiterhin Farbstoffmischungen, die einen Farbstoff der Formel II enthalten, in der $L^1$ und $L^2$ jeweils Cyano oder einer der beiden Reste auch Methoxycarbonyl und einer der beiden Reste $L^3$ und $L^4$ Wasserstoff und der andere einen Rest der Formel $(CH_2)_2O(CH_2)_2OH$, $(CH_2)_2O(CH_2)_2OCOCH_3$, $(CH_2)_3O(CH_2)_4OH$ oder $(CH_2)_3O(CH_2)_4OCOCH_3$ bedeuten.

Besonders hervorzuheben sind weiterhin Farbstoffmischungen, die einen Farbstoff der Formel III enthalten, in der

- $Z^1$ Methyl oder Ethyl,
- $Z^2$ und $Z^3$ $C_2$-$C_3$-Alkyl und
- $Z^4$ Methyl oder Ethyl bedeuten.

Insbesondere zu nennen sind Farbstoffmischungen, die einen Farbstoff der Formel I enthalten, in der $R^4$ $C_2$-$C_3$-Alkyl und $R^5$ 3-Methoxypropyl, 3-Ethoxypropyl, 4,7-Dioxaoctyl, 4,7-Dioxa-5-methyloctyl, 4,7-Dioxanonyl, 4,7,10-Trioxaundecyl oder 4,7,10-Trioxadodecyl bedeuten.

Von besonderem Interesse sind Farbstoffmischungen, die mindestens einen Farbstoff der Formel I sowie mindestens einen Farbstoff der Formel II enthalten.

Wichtige Farbstoffe der Formel II sind beispielsweise

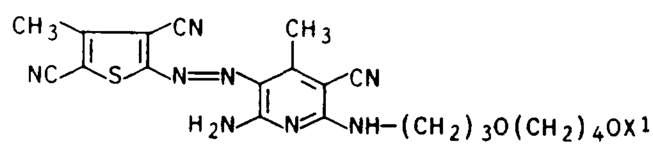

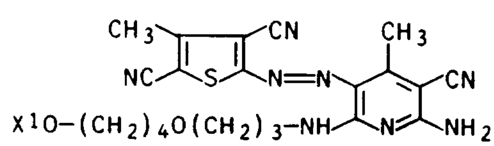

(wobei $X^1$ jeweils für Wasserstoff, Formyl, Acetyl oder Propionyl steht)

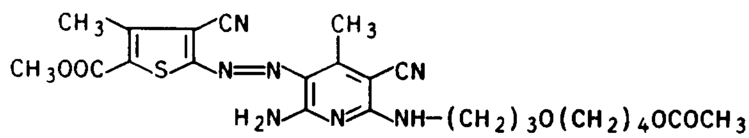

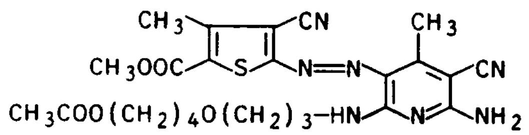

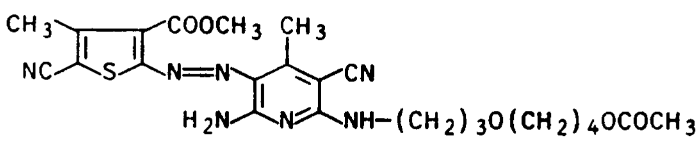

oder

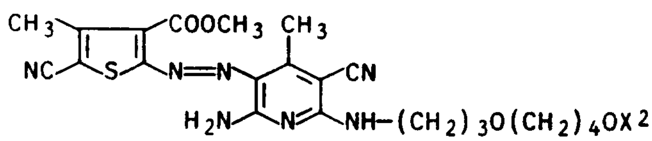

(wobei $X^2$ jeweils für Wasserstoff oder Formyl steht).

Wichtige Farbstoffe der Formel III sind beispielsweise

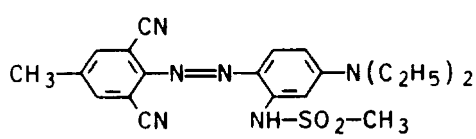

oder

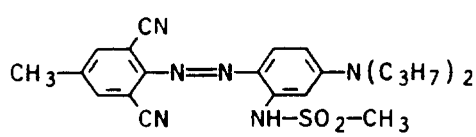

In den Mischungen der Farbstoffe I, II und/oder III können die Farbstoffe jeweils als Einzelkomponenten oder aber auch als Mischungen untereinander auftreten. Beispielsweise können Farbstoffmischungen hergestellt werden, die eine Mischung aus Farbstoffen der Formel I, eine Mischung aus Farbstoffen der Formel II und/oder eine Mischung aus Farbstoffen der Formel III enthalten.

Die Mischungen der einzelnen Farbstoffe I, II und/oder III untereinander können durch mechanisches Mischen der Partner oder durch Mischkupplung erhalten werden.

Wenn Mischungen der Farbstoffe I untereinander vorliegen, werden diese vorzugsweise mittels Mischkupplung hergestellt.

Von besonderem Interesse sind dabei die folgenden Kupplungskomponenten:

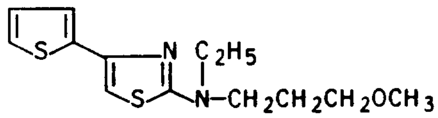

(IVa)

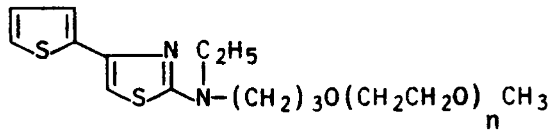

(IVb)

(n = 1 oder 2)

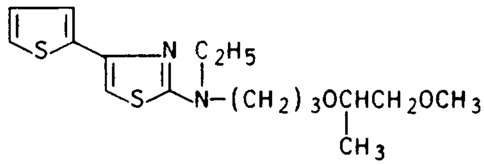

(IVc)

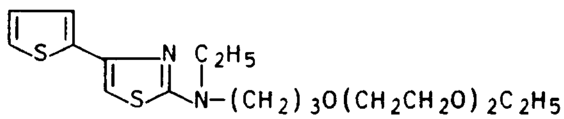

(IVd)

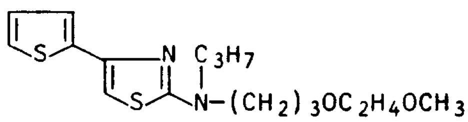

(IVe)

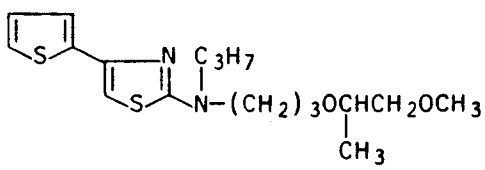

(IVf)

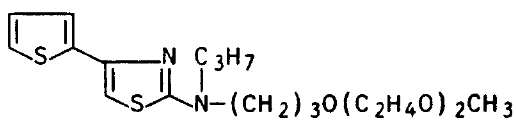

(IVg)

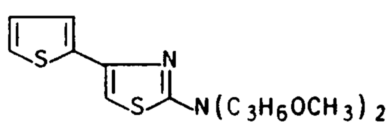

(IVh)

Besonders geeignete Mischungen von Farbstoffen der Formel I werden beispielsweise durch Mischkupplung der Diazoniumverbindung, die sich von 2-Amino-3,5-dicyano-4-methylthiophen ableitet, mit Mischungen der Kupplungskomponenten der Formel

IVa, IVb (n = 1) und IVc;
IVa, IVc und IVe;
IVa, IVc und IVf;
IVb (n = 1), IVc und IVe;

IVb (n = 1), IVc und IVf oder
IVa, IVc, IVe und IVh erhalten.

Bei den Farbstoffen der Formel I, II und III handelt es sich im allgemeinen um an sich bekannte Farbstoffe. Wie oben bereits ausgeführt, sind die Thiophenazofarbstoffe der Formel I z.B. in der älteren Patentanmeldung EP-A-362 637 beschrieben. Die Farbstoffe der Formel II sind z.B. aus der EP-A-214 445 bekannt, jene der Formel III z.B. aus der DE-A-2 711 130.

Die Herstellung der erfindungsgemäßen Farbstoffmischungen erfolgt durch Mischen der jeweiligen Partner im genannten Gewichtsverhältnis. Gegebenenfalls können den neuen Mischungen weitere Komponenten, z.B. Dispergiermittel oder Nuancierfarbstoffe (z.B. 0,1 bis 2 Gew.-% eines Orangefarbstoffs, bezogen auf das Gewicht der Farbstoffe I, II und/oder III), zugesetzt werden. Es ist auch möglich, bereits fertige Farbstoffpräparationen der jeweiligen Partner abzumischen.

Die neuen Farbstoffmischungen eignen sich zum Färben und Bedrucken von synthetischen Geweben, insbesondere von Polyestergeweben. Man erhält dabei Ausfärbungen und Drucke in marineblauen Tönen, die sich durch gute Lichtechtheit und hohe Farbstärke auszeichnen.

Ein weiterer Vorteil der erfindungsgemäßen Farbstoffmischungen liegt in ihrer arbeitsplatzhygienischen Unbedenklichkeit.

Die Färbe- und Druckverfahren sind an sich bekannt. Nähere Einzelheiten können auch den Beispielen entnommen werden.

Die folgenden Beispiele sollen die Erfindung näher erläutern.

Beispiel 1

33,33 g des Farbstoffs der Formel

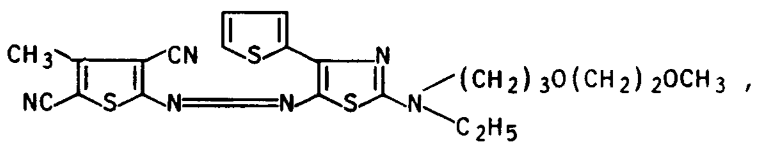

33,33 g des Farbstoffs der Formel

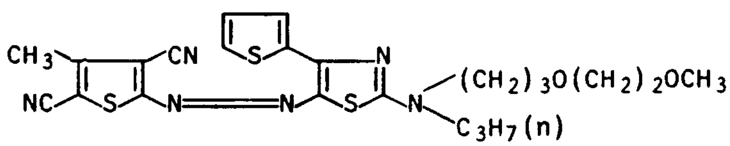

und 33,33 g des Farbstoffs der Formel

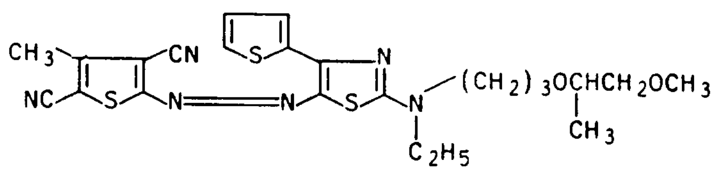

wurden mechanisch gemischt. Zu dieser Mischung wurden 9,33 g des Farbstoffs der Formel

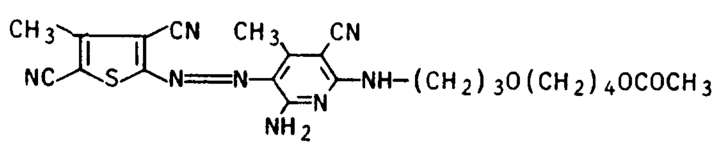

und 4,67 g des Farbstoffs der Formel

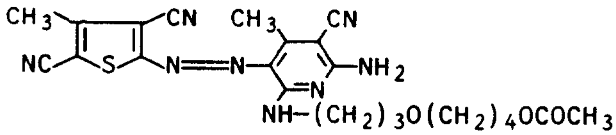

gegeben. Danach erfolgte eine intensive Vermischung. Aus der resultierenden Mischung stellte man mit Hilfe von 176 g eines Dispergiermittels auf Basis von Ligninsulfonat 290 g einer dispergierten wäßrigen Farbstoffmischung her.

10 g Polyestergewebe wurden bei einer Temperatur von 60 °C in 200 ml einer wäßrigen Färbeflotte gegeben, die 0,4 g der obengenannten Farbstoffmischung, bezogen auf das Polyestergewebe, enthielt und deren pH-Wert mittels Essigsäure auf 4,5 eingestellt war. Man behandelte 5 Minuten bei 60 °C, steigerte dann die Temperatur der Flotte innerhalb von 30 Minuten auf 135 °C, hielt 60 Minuten bei dieser Temperatur und ließ dann innerhalb von 20 Minuten auf 60 °C abkühlen.

Danach wurde das ausgefärbte Polyestergewebe reduktiv gereinigt, indem man es 15 Minuten in 200 ml einer Flotte, die 5 ml/l 32 gew.%ige Natronlauge, 3 g/l Natriumdithionit und 1 g/l eines Anlagerungsproduktes von 48 Mol Ethylenoxid an 1 Mol Ricinusöl enthielt, bei 65 °C behandelt. Schließlich wurde das Gewebe gespült, mit verdünnter Essigsäure neutralisiert, nochmals gespült und getrocknet.

Man erhielt eine rotstichige Marineblaufärbung der Marineblaustufe 1 mit hoher Licht- und Thermofixierechtheit.

Beispiel 2

Beispiel 2 wurde analog Beispiel 1 durchgeführt, jedoch wurde die Mischung derjenigen Thiophenazofarbstoffe, die eine Thiazolkupplungskomponente aufweisen, nicht durch mechanisches Mischen sondern durch Mischkupplung hergestellt. Man erhielt Färbungen mit ähnlich günstigen Eigenschaften.

Beispiel 3

10 g Polyestergewebe wurden analog der in Beispiel 1 genannten Arbeitsweise mit den gleichen Mengen der genannten Farbstoffe sowie zusätzlich mit 1,1 g eines Nuancierfarbstoffs (orange) der Formel

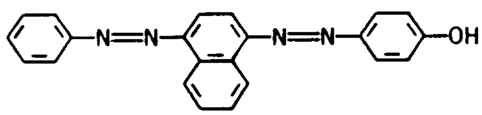

gefärbt.

Man erhielt eine rotstichige Marineblaufärbung der Stufe 1 mit sehr guter Licht- und Thermofixierechtheit.

Beispiel 4

0, 16 g einer Mischung der Farbstoffe der Formel

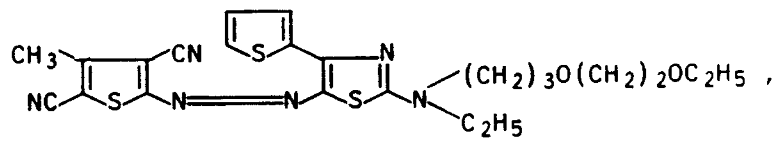

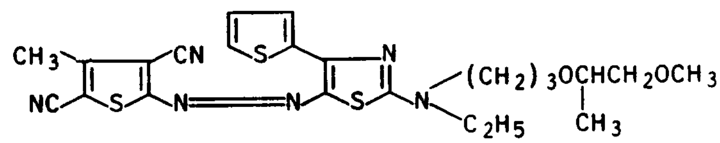

und

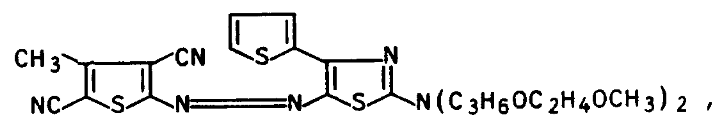

hergestellt durch Mischkupplung gleicher Molmengen der jeweiligen Kupplungskomponenten, wurden analog Beispiel 1 dispergiert und in die wäßrige Färbeflotte (200 ml) gegeben. Dazu gab man weiterhin 0,014 g einer Mischung der Farbstoffe der Formel

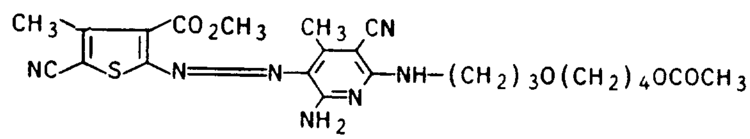

und

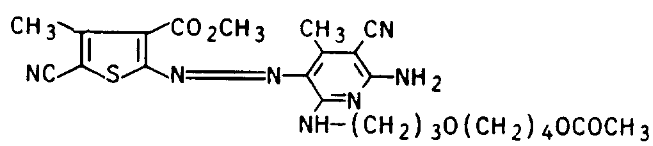

sowie
0,0032 g eines Nuancierfarbstoffs (orange) der Formel

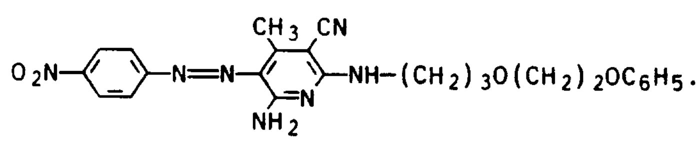

Anschließend färbte man 10 g Polyestergewebe analog der in Beispiel 1 angegebenen Arbeitsweise.

Man erhielt eine hoch lichtechte marineblaue Färbung der Stufe 1.

Beispiel 5

Man verwendete je 0,08 g der Farbstoffe der Formel

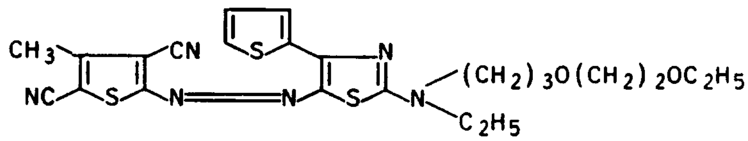

und

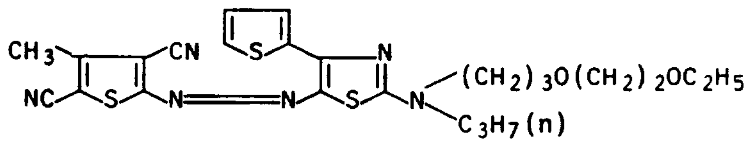

anstelle der im Beispiel 4 genannten Thiophenazothiazolfarbstoffe und verfuhr im übrigen wie in Beispiel 3 angegeben. Man erhielt so eine hoch lichtechte marineblaue Färbung der Stufe 1.

Ähnlich günstige Ergebnisse werden erhalten, wenn man, analog den voranstehenden Beispielen, die in den folgenden Tabellen 1 bis 3 aufgeführten Farbstoffe, die den allgemeinen Formeln I, II und II entsprechen, mischt.

Tabelle 1

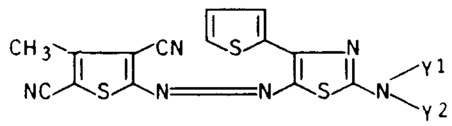

(Farbstoffe der Formel I)

| Farbstoff Nr. | $Y^1$ | $Y^2$ |
|---|---|---|
| 6 | $(CH_2)_3OCH_3$ | $(CH_2)_3OCH_3$ |
| 7 | $(CH_2)_3O(CH_2CH_2O)_2CH_3$ | $C_2H_5$ |
| 8 | $(CH_2)_3O(CH_2CH_2O)_2C_2H_5$ | $C_2H_5$ |
| 9 | $(CH_2)_3O(CH_2CH_2O)_2C_2H_5$ | $C_3H_7(n)$ |
| 10 | $(CH_2)_3OCH(CH_3)CH_2OCH_3$ | $C_3H_7(n)$ |
| 11 | $(CH_2)_3OC_2H_5$ | $(CH_2)_3OCH_3$ |
| 12 | $(CH_2)_3OCH_3$ | $C_3H_7(n)$ |
| 13 | $(CH_2)_2O(CH_2)_2OCH_3$ | $C_3H_7(n)$ |
| 14 | $(CH_2)_2O(CH_2)_2OC_2H_5$ | $C_2H_5$ |

Tabelle 2

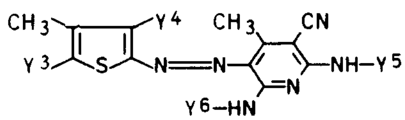

(Farbstoffe der Formel II)

| Farbstoff Nr. | $Y^3$ | $Y^4$ | einer der beiden Reste $Y^5$ und $Y^6$ = Wasserstoff und der andere |
|---|---|---|---|
| 15 | $CO_2CH_3$ | CN | $(CH_2)_3O(CH_2)_4OCOCH_3$ |
| 16 | $CO_2CH_3$ | CN | $(CH_2)_3OCH(CH_3)CH_2OCH_3$ |
| 17 | CN | $CO_2CH_3$ | $(CH_2)_3OCH(CH_3)CH_2OCH_3$ |
| 18 | CN | $CO_2CH_3$ | $(CH_2)_2O(CH_2)_2OCOCH_3$ |
| 19 | CN | $CO_2CH_3$ | $(CH_2)_3O(CH_2)_4OH$ |
| 20 | CN | $CO_2CH_3$ | $(CH_2)_3O(CH_2)_4OCOH$ |
| 21 | CN | $CO_2CH_3$ | $(CH_2)_3O(CH_2)_4OCOCH_3$ |
| 22 | CN | CN | $(CH_2)_3O(CH_2)_4OCOCH_3$ |
| 23 | CN | CN | $(CH_2)_3OCH(CH_3)CH_2OCH_3$ |

Tabelle 3

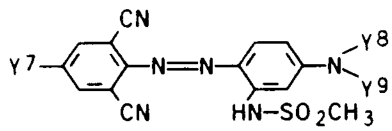

(Farbstoffe der Formel III)

| Farbstoff Nr. | $Y^7$ | $Y^8$ | $Y^9$ |
|---|---|---|---|
| 24 | $CH_3$ | $C_2H_5$ | $C_2H_5$ |
| 25 | $CH_3$ | $C_2H_5$ | $C_3H_7$ |
| 26 | $CH_3$ | $C_3H_7(n)$ | $C_3H_7(n)$ |
| 27 | $C_2H_5$ | $C_2H_5$ | $C_2H_5$ |

## Patentansprüche

**1.** Farbstoffmischungen, enthaltend mindestens einen Farbstoff der Formel I

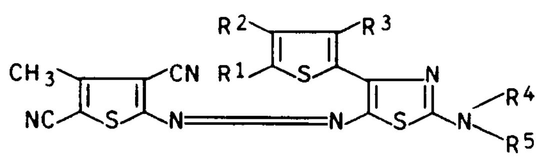

(I),

in der

| | |
|---|---|
| $R^1$, $R^2$ und $R^3$ | gleich oder verschieden sind und unabhängig voneinander jeweils Wasserstoff oder $C_1$-$C_4$-Alkyl, |
| $R^4$ | $C_1$-$C_4$-Alkyl oder $C_3$-$C_8$-Alkyl, das durch 1 bis 3 Sauerstoffatome in Etherfunktion unterbrochen ist, und |
| $R^5$ | $C_1$-$C_4$-Alkyl oder $C_3$-$C_{12}$-Alkyl, das durch 1 bis 4 Sauerstoffatome in Etherfunktion unterbrochen ist, bedeuten, |

sowie mindestens einen Farbstoff der Formel II

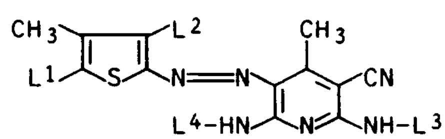

(II)

und/oder mindestens einen Farbstoff der Formel III

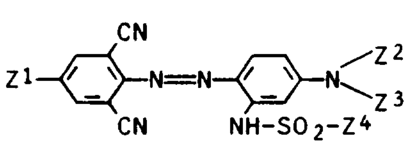

(III),

wobei

$L^1$ und $L^2$ jeweils Cyano oder einer der beiden Reste auch $C_1$-$C_2$-Alkoxycarbonyl,
einer der beiden Resten $L^3$ und $L^4$ Wasserstoff und der andere einen Rest der Formel
$(CH_2)_2O(CH_2)_2OH$, $(CH_2)_2O(CH_2)_2OCOCH_3$, $(CH_2)_3OCH(CH_3)CH_2OCH_3$, $(CH_2)_3O(CH_2)_4OH$, $(CH_2)_3O(CH_2)_4OCHO$, $(CH_2)_3O(CH_2)_4OCOCH_3$ oder $(CH_2)_3O(CH_2)_2OCH_3$ und
$Z^1$, $Z^2$, $Z^3$ und $Z^4$ gleich oder verschieden sind und unabhängig voneinander jeweils $C_1$-$C_4$-Alkyl bedeuten,
wobei das Gewichtsverhältnis Farbstoff I:Farbstoff II und/oder III 80:20 bis 96:4 beträgt.

2. Farbstoffmischungen nach Anspruch 1, wobei das Gewichtsverhältnis Farbstoff I : Farbstoff II und/oder III 86:14 bis 94:6 beträgt.

3. Farbstoffmischungen nach Anspruch 1, enthaltend einen Farbstoff der Formel I, in der $R^4$ und $R^5$ voneinander verschieden sind.

4. Verwendung der Farbstoffmischungen gemäß Anspruch 1 zum Färben oder Bedrucken von synthetischen Geweben.

**Claims**

1. A dye mixture containing at least one dye of the formula I

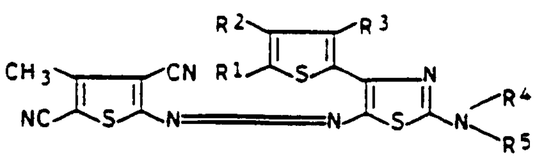

(I)

where
$R^1$, $R^2$ and $R^3$ are identical or different and each is independently of the others hydrogen or $C_1$-$C_4$-alkyl,
$R^4$ is $C_1$-$C_4$-alkyl or $C_3$-$C_8$-alkyl which is interrupted by from 1 to 3 oxygen atoms in ether function, and
$R^5$ is $C_1$-$C_4$-alkyl or $C_3$-$C_{12}$-alkyl which is interrupted by from 1 to 4 oxygen atoms in ether function,
and also at least one dye of the formula II

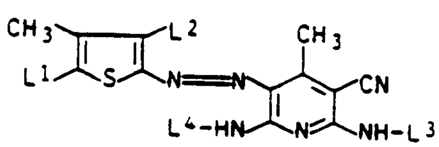

(II)

and/or at least one dye of the formula III

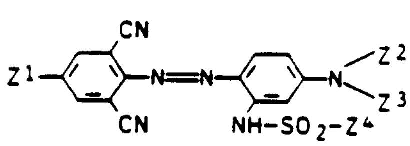

(III)

where
$L^1$ and $L^2$ are each cyano or one of the two radicals may also be $C_1$-$C_2$-alkoxycarbonyl,
one of the two radicals $L^3$ and $L^4$ is hydrogen while the other is a radical of the formula
$(CH_2)_2O(CH_2)_2OH$, $(CH_2)_2O(CH_2)_2OCOCH_3$, $(CH_2)_3OCH(CH_3)CH_2OCH_3$, $(CH_2)_3O(CH_2)_4OH$, $(CH_2)_3O(CH_2)_4OCHO$, $(CH_2)_3O(CH_2)_4OCOCH_3$ or $(CH_2)_3O(CH_2)_2OCH_3$ and
$Z^1$, $Z^2$, $Z^3$ and $Z^4$ are identical or different and each is independently of the others $C_1$-$C_4$-alkyl,

wherein the weight ratio of dye I:dye II and/or III is from 80:20 to 96:4.

2. A dye mixture as claimed in claim 1, wherein the weight ratio of dye I:dye II and/or III is from 86:14 to 94:6.

3. A dye mixture as claimed in claim 1, containing a dye of the formula I in which $R^4$ and $R^5$ are different from each other.

4. The use of a dye mixture as claimed in claim 1 for dyeing or printing a synthetic fabric.

## Revendications

1. Mélanges colorants, contenant au moins un colorant de la formule I

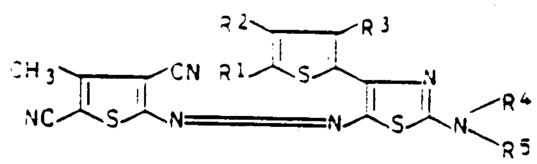

(I),

dans laquelle

$R^1$ $R^2$ et $R^3$ sont identiques ou différents et représentent chacun, indépendamment les uns des autres, un atome d'hydrogène ou un radical alkyle en $C_1$-$C_4$,

$R^4$ représente un radical alkyle en $C_1$-$C_4$ ou alkyle en $C_3$-$C_8$, qui peut être interrompu par de 1 à 3 atomes d'oxygène en fonction éther et

$R^5$ représente un radical alkyle en $C_1$-$C_4$ ou alkyle en $C_3$-$C_{12}$, qui peut être interrompu par de 1 à 4 atomes d'oxygène en fonction éther,

ainsi qu'au moins un colorant de la formule II

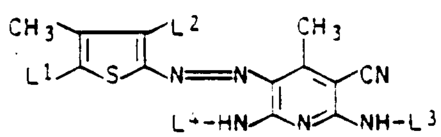

(II)

et/ou au moins un colorant de la formule III

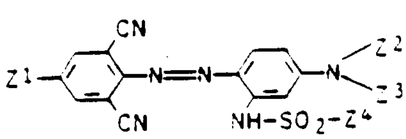

(III),

dans laquelle

$L^1$ et $L^2$ représentent chacun un radical cyano, ou l'un des deux restes représente aussi un radical carbonylalcoxy en $C_1$-$C_2$,

l'un des deux restes $L^3$ et $L^4$ représente un atome d'hydrogène et l'autre représente un reste de la formule

$(CH_2)_2O(CH_2)_2OH$, $(CH_2)_2O(CH_2)_2OCOCH_3$, $(CH_2)_3OCH(CH_3)CH_2OCH_3$, $(CH_2)_3O(CH_2)_4OH$, $(CH_2)_3O(CH_2)_4OCHO$, $(CH_2)_3O(CH_2)_4OCOCH_3$ ou $(CH_2)_3O(CH_2)_2OCH_3$ et

$Z^1$, $Z^2$, $Z^3$ et $Z^4$ , sont identiques ou différents et représentent chacun indépendamment les uns des autres, un radical alkyle en $C_1$-$C_4$.

où le rapport pondéral colorant I:colorant II et/ou III varie de 80:20 à 96:4.

2. Mélanges colorants suivant la revendication 1, caractérisés en ce que le rapport pondéral colorant I: colorant II et/ou III varie de 86:14 à 94:6.

**3.** Mélanges colorants suivant la revendication 1, caractérisés en ce qu'ils contiennent un colorant de la formule I dans laquelle $R^4$ et $R^5$ diffèrent l'un de l'autre.

**4.** Utilisation des mélanges colorants suivant la revendication 1, en vue de la teinture ou de l'impression de tissus synthétiques.